# EUROPÄISCHE PATENTANMELDUNG

(11) **EP 3 338 957 A1**
(43) Veröffentlichungstag der Anmeldung: **27.06.2018**
(21) Anmeldenummer: 16206612.0
(22) Anmeldetag: 23.12.2016
(51) Int. Cl.: B25F 3/00

(54) **WERKZEUGGERÄT**

(71) Anmelder: HILTI Aktiengesellschaft, 9494 Schaan (LI)
(72) Erfinder: Franz, Karl, 71570 Oppenweiler (DE); Blessing, Matthias, 6820 Frastanz (AT); Fielitz, Harald, 88131 Lindau (DE)
(74) Vertreter: Hilti Aktiengesellschaft Corporate Intellectual Property

(57) **Zusammenfassung**

Werkzeuggerät (100), umfassend ein erstes Modul (110) und ein von dem ersten Modul abnehmbares zweites Modul (120), wobei das erste Modul eine Steckaufnahme (310) aufweist und das zweite Modul ein entlang einer Steckachse (230) in die Steckaufnahme einsteckbares Steckteil aufweist, wobei das Steckteil in der Steckaufnahme zwischen einer Sperrstellung und einer Passierstellung um die Steckachse verdrehbar ist, wobei die Steckaufnahme einen ersten Vorsprung (340) aufweist und das Steckteil einen zweiten Vorsprung (240) aufweist, wobei in der Sperrstellung der zweite Vorsprung den ersten Vorsprung in Richtung der Steckachse hintergreift, wobei in der Passierstellung der erste Vorsprung in Richtung der Steckachse den zweiten Vorsprung passieren lässt, wobei die Steckaufnahme in einer Grundstellung ein Auslösen des Werkzeuggeräts verhindert und in einer Anpressstellung ein Auslösen des Werkzeuggeräts zulässt.

## Beschreibung

Die Erfindung betrifft ein aus mehreren voneinander abnehmbaren Modulen bestehendes Werkzeuggerät, wie beispielsweise ein Setzgerät zum Setzen von Befestigungselementen wie Nägeln, Bolzen, Nieten, Schrauben, Ankern, oder einen Bohrhammer.

Aus dem Stand der Technik sind Werkzeuggeräte bekannt, die jeweils ein erstes Modul und ein von dem ersten Modul abnehmbares zweites Modul umfassen. Es ist bekannt, das erste Modul mit einem Gewinde und das zweite Modul mit einem Gegengewinde zu versehen, so dass das zweite Modul von dem ersten Modul abgeschraubt werden kann. Dies ist jedoch zeitaufwendig.

Es ist die Aufgabe der Erfindung, ein Werkzeuggerät anzugeben, bei dem ein erstes Modul schnell und/oder einfach von einem zweiten Modul abnehmbar ist.

Gemäss einem Aspekt der Anmeldung umfasst ein Werkzeuggerät ein erstes Modul und ein von dem ersten Modul abnehmbares zweites Modul, wobei das erste Modul eine Steckaufnahme aufweist und das zweite Modul ein entlang einer eine Steckrichtung definierenden Steckachse in die Steckaufnahme einsteckbares Steckteil aufweist. Dabei ist das Steckteil in der Steckaufnahme zwischen einer Sperrstellung und einer Passierstellung in einer Drehrichtung um die Steckachse verdrehbar, wobei die Steckaufnahme mehrere in der Steckrichtung aufeinanderfolgende erste Vorsprünge aufweist und das Steckteil mehrere in der Steckrichtung aufeinanderfolgende zweite Vorsprünge aufweist. In der Sperrstellung hintergreift jeweils ein zweiter Vorsprung einen ersten Vorsprung in Richtung der Steckachse, wohingegen in der Passierstellung die ersten Vorsprünge die jeweiligen zweiten Vorsprünge in Richtung der Steckachse passieren lassen.

Eine vorteilhafte Ausführungsform ist dadurch gekennzeichnet, dass die ersten Vorsprünge in der Drehrichtung um die Steckachse nebeneinander angeordnet sind. Eine weitere vorteilhafte Ausführungsform ist dadurch gekennzeichnet, dass die zweiten Vorsprünge in der Drehrichtung um die Steckachse nebeneinander angeordnet sind.

Eine vorteilhafte Ausführungsform ist dadurch gekennzeichnet, dass ein erster Vorsprung auf seiner von dem zweiten Modul abgewandten Seite eine entlang der Steckachse ansteigende erste Flanke aufweist. Bevorzugt steigen die ersten Flanken mehrerer erster Vorsprünge entlang der Steckachse unterschiedlich steil an. Besonders bevorzugt werden die ersten Flanken in Richtung von dem zweiten Modul weg von jeweils einem zum nächsten ersten Vorsprung steiler.

Eine vorteilhafte Ausführungsform ist dadurch gekennzeichnet, dass mehrere erste Vorsprünge eine unterschiedliche in Bezug auf die Steckachse radiale Höhe aufweisen. Bevorzugt werden die ersten Vorsprünge entlang der Steckachse von dem zweiten Modul weg von jeweils einem zum nächsten ersten Vorsprung höher.

Eine vorteilhafte Ausführungsform ist dadurch gekennzeichnet, dass ein zweiter Vorsprung auf seiner von dem ersten Modul abgewandten Seite eine entlang der Steckachse ansteigende erste Flanke aufweist. Bevorzugt steigen die zweiten Flanken mehrerer zweiter Vorsprünge entlang der Steckachse unterschiedlich steil an. Besonders bevorzugt werden die zweiten Flanken in Richtung von dem ersten Modul weg von jeweils einem zum nächsten zweiten Vorsprung steiler.

Eine vorteilhafte Ausführungsform ist dadurch gekennzeichnet, dass mehrere zweite Vorsprünge eine unterschiedliche in Bezug auf die Steckachse radiale Höhe aufweisen. Bevorzugt werden die zweiten Vorsprünge entlang der Steckachse von dem ersten Modul weg von jeweils einem zum nächsten zweiten Vorsprung höher.

Eine vorteilhafte Ausführungsform ist dadurch gekennzeichnet, dass ein entlang der Setzachse zu dem zweiten Modul hin vorderster erster Vorsprung eine zu einer Umfangsrichtung um die Setzachse geneigte erste Einführrampe aufweist. Eine weitere vorteilhafte Ausführungsform ist dadurch gekennzeichnet, dass ein entlang der Setzachse zu dem ersten Modul hin vorderster zweiter Vorsprung eine zu einer Umfangsrichtung um die Setzachse geneigte zweite Einführrampe aufweist.

Gemäss einem weiteren Aspekt der Anmeldung umfasst ein Werkzeuggerät ein erstes Modul und ein von dem ersten Modul abnehmbares zweites Modul, wobei das erste Modul eine Steckaufnahme aufweist und das zweite Modul ein entlang einer eine Steckrichtung definierenden Steckachse in die Steckaufnahme einsteckbares Steckteil aufweist. Dabei ist das Steckteil in der Steckaufnahme zwischen einer Sperrstellung und einer Passierstellung in einer Drehrichtung um die Steckachse verdrehbar. Die Steckaufnahme weist einen ersten Vorsprung auf und das Steckteil weist einen zweiten Vorsprung auf, wobei in der Sperrstellung der zweite Vorsprung den ersten Vorsprung in Richtung der Steckachse hintergreift und in der Passierstellung der erste Vorsprung in Richtung der Steckachse den zweiten Vorsprung passieren lässt. Das Werkzeuggerät weist eine Verriegelungseinrichtung mit einer Verriegelungsstellung und einer Entriegelungsstellung auf, wobei die Verriegelungseinrichtung ein Abnehmen des zweiten Moduls von dem ersten Modul in der Verriegelungsstellung verhindert und in der Entriegelungsstellung erlaubt.

Eine vorteilhafte Ausführungsform ist dadurch gekennzeichnet, dass die Verriegelungseinrichtung einen an einem der beiden Module angeordneten Riegel und eine an dem anderen der beiden Module angeordnete Riegelaufnahme aufweist, und wobei der Riegel in der Verriegelungsstellung in die Riegelaufnahme eingreift und in der Entriegelungsstellung ausserhalb der Riegelaufnahme angeordnet ist. Bevorzugt weist das andere der beiden Module ein Verbindungsglied auf, welches gegenüber dem übrigen Modul um die Steckachse drehbar angeordnet ist und die Riegelaufnahme aufweist. Ebenfalls bevorzugt bewegt sich der Riegel beim Übergang von der Entriegelungsstellung in die Verriegelungsstellung bezüglich der Steckachse radial nach innen in die Riegelaufnahme hinein. Alternativ bewegt sich der Riegel beim Übergang von der Entriegelungsstellung in die Verriegelungsstellung bezüglich der Steckachse radial nach aussen in die Riegelaufnahme hinein.

Eine vorteilhafte Ausführungsform ist dadurch gekennzeichnet, dass die Verriegelungseinrichtung ein Betätigungselement aufweist. Bevorzugt ist das Betätigungselement starr mit dem Riegel verbunden.

Eine vorteilhafte Ausführungsform ist dadurch gekennzeichnet, dass die Verriegelungseinrichtung eine Riegelfeder aufweist, welche den Riegel und die Riegelaufnahme aufeinander zu belastet.

Eine vorteilhafte Ausführungsform ist dadurch gekennzeichnet, dass die Verriegelungseinrichtung ein Verschieben des Steckteils gegenüber der Steckaufnahme entlang der Steckachse in der Verriegelungsstellung sperrt und in der Entriegelungsstellung freigibt.

Eine vorteilhafte Ausführungsform ist dadurch gekennzeichnet, dass die Verriegelungseinrichtung mehrere an dem anderen der beiden Module angeordnete Riegelaufnahmen aufweist.

Eine vorteilhafte Ausführungsform ist dadurch gekennzeichnet, dass das Steckteil in der Steckaufnahme zwischen mehreren Sperrstellungen und mehreren Passierstellungen um die Steckachse verdrehbar ist.

Eine vorteilhafte Ausführungsform ist dadurch gekennzeichnet, dass das Werkzeuggerät eine Rasteinrichtung mit einem Rastelement und einer Rastaufnahme umfasst, wobei das Rastelement in der Sperrstellung in die Rastaufnahme einrastet. Bevorzugt ist das Rastelement an einem der beiden Module und die Rastaufnahme an dem anderen der beiden Module angeordnet. Ebenfalls bevorzugt ist das Rastelement an dem anderen der beiden Module und die Rastaufnahme an dem Verbindungsglied angeordnet. Ebenfalls bevorzugt ist die Rastaufnahme an dem anderen der beiden Module und das Rastelement an dem Verbindungsglied angeordnet.

Eine vorteilhafte Ausführungsform ist dadurch gekennzeichnet, dass das Werkzeuggerät weiterhin eine Sicherungseinrichtung mit einer gesicherten Stellung und einer entsicherten Stellung umfasst, wobei die Sicherungseinrichtung ein Aktivieren des Werkzeuggeräts in der gesicherten Stellung verhindert und in der entsicherten Stellung erlaubt. Weiterhin umfasst das Werkzeuggerät eine Entsicherungssperre, welche einen Übergang der Sicherungseinrichtung von der gesicherten Stellung in die entsicherte Stellung in der Passierstellung blockiert und in der Sperrstellung freigibt. Bevorzugt weist die Entsicherungssperre ein an dem ersten Modul angeordnetes erstes Blockierelement und ein an dem zweiten Modul angeordnetes zweites Blockierelement auf, wobei das erste Blockierelement und das zweite Blockierelement in der Passierstellung einander blockieren und in der Sperrstellung einander passieren lassen. Ebenfalls bevorzugt weist die Entsicherungssperre mehrere erste Blockierelemente und/oder mehrere zweite Blockierelemente auf.

Eine vorteilhafte Ausführungsform ist dadurch gekennzeichnet, dass die Verriegelungseinrichtung ein Verdrehen des Steckteils in der Steckaufnahme um die Steckachse in der Verriegelungsstellung sperrt und in der Entriegelungsstellung freigibt.

Eine vorteilhafte Ausführungsform ist dadurch gekennzeichnet, dass sich der Riegel beim Übergang von der Entriegelungsstellung in die Verriegelungsstellung entlang der Steckachse in die Riegelaufnahme hinein bewegt.

Gemäss einem weiteren Aspekt der Anmeldung umfasst ein Werkzeuggerät ein erstes Modul und ein von dem ersten Modul abnehmbares zweites Modul, wobei das erste Modul eine Steckaufnahme aufweist und das zweite Modul ein entlang einer eine Steckrichtung definierenden Steckachse in die Steckaufnahme einsteckbares Steckteil aufweist. Dabei ist das Steckteil in der Steckaufnahme zwischen einer Sperrstellung und einer Passierstellung in einer Drehrichtung um die Steckachse verdrehbar. Die Steckaufnahme weist einen ersten Vorsprung auf und das Steckteil weist einen zweiten Vorsprung auf, wobei in der Sperrstellung der zweite Vorsprung den ersten Vorsprung in Richtung der Steckachse hintergreift, wohingegen in der Passierstellung der erste Vorsprung in Richtung der Steckachse den zweiten Vorsprung passieren lässt. Eines der beiden Module umfasst ein Sperrglied und ein Stützglied, wobei das Sperrglied eine zu dem anderen der beiden Module hinweisende äussere Sperrkontur und eine von dem anderen der beiden Module wegweisende innere Sperrkontur aufweist. Das andere der beiden Module weist eine zu dem Sperrglied hinweisende Gegenkontur auf, wobei die äussere Sperrkontur in einer Sperrstellung des Sperrglieds in die Gegenkontur eingreift, um eine Verdrehung des einen gegenüber dem anderen der beiden Module um die Steckachse zu sperren. Das Stützglied weist eine Stützkontur auf, welche in einer Haltestellung des Stützglieds die innere Sperrkontur in Richtung der Steckachse abstützt, um das Sperrglied in der Sperrstellung zu halten, und welche in einer Freigabestellung des Stützglieds ein Ausrücken des Sperrglieds aus der Sperrstellung entlang der Steckachse zulässt.

Eine vorteilhafte Ausführungsform ist dadurch gekennzeichnet, dass das Stützglied von der Haltestellung in die Freigabestellung durch Verdrehung des Stützglieds gegenüber dem Sperrglied um die Steckachse überführbar ist.

Eine vorteilhafte Ausführungsform ist dadurch gekennzeichnet, dass die innere Sperrkontur und/oder die Stützkontur eine Einführschräge zur Erleichterung einer Überführung des Stützglieds von der Freigabestellung in die Haltestellung aufweist.

Eine vorteilhafte Ausführungsform ist dadurch gekennzeichnet, dass die äussere Sperrkontur und/oder die Gegenkontur eine Ausrückrampe zur Erleichterung eines Ausrückens des Sperrglieds aus der Sperrstellung aufweist.

Eine vorteilhafte Ausführungsform ist dadurch gekennzeichnet, dass das Werkzeuggerät eine Stützfeder umfasst, welche das Stützglied gegenüber dem Sperrglied in die Haltestellung vorbelastet.

Eine vorteilhafte Ausführungsform ist dadurch gekennzeichnet, dass das eine der beiden Module gegenüber dem anderen der beiden Module zwischen mehreren Raststellungen um die Steckachse verdrehbar ist, wenn das Sperrglied aus der Sperrstellung ausgerückt ist, und wobei das eine der beiden Module gegenüber dem anderen der beiden Module in einer der Raststellungen festgelegt ist, wenn das Sperrglied in die Sperrstellung eingerückt ist. Bevorzugt umfassen die Raststellungen mindestens zwei Energie- und/oder Leistungseinstellungen mit unterschiedlicher Betriebsenergie/-leistung des Werkzeuggeräts. Ebenfalls bevorzugt umfassen die Raststellungen eine Betriebsstellung, in welcher das Werkzeuggerät in seiner vorgesehenen Funktion betreibbar ist, und eine Demontagestellung, in welcher das eine von dem anderen der beiden Module abnehmbar ist.

Gemäss einem weiteren Aspekt der Anmeldung umfasst ein Werkzeuggerät ein erstes Modul und ein von dem ersten Modul abnehmbares zweites Modul, wobei das erste Modul eine Steckaufnahme aufweist und das zweite Modul ein entlang einer eine Steckrichtung definierenden Steckachse in die Steckaufnahme einsteckbares Steckteil aufweist. Dabei ist das Steckteil in der Steckaufnahme zwischen einer Sperrstellung und einer Passierstellung in einer Drehrichtung um die Steckachse verdrehbar. Die Steckaufnahme weist einen ersten Vorsprung auf und das Steckteil weist einen zweiten Vorsprung auf, wobei in der Sperrstellung der zweite Vorsprung den ersten Vorsprung in Richtung der Steckachse hintergreift und in der Passierstellung der erste Vorsprung in Richtung der Steckachse den zweiten Vorsprung passieren lässt. Die Steckaufnahme verhindert in einer Grundstellung ein Auslösen des Werkzeuggeräts und lässt in einer Anpressstellung ein Auslösen des Werkzeuggeräts zu, wobei ein Anpressen des zweiten Moduls an das erste Modul, während sich das Steckteil in der Steckaufnahme in der Sperrstellung befindet, die Steckaufnahme in Richtung der Steckachse in die Anpressstellung überführt.

Eine vorteilhafte Ausführungsform ist dadurch gekennzeichnet, dass das erste Modul ein entlang der Steckachse mit der Steckaufnahme mitbewegtes Anpresssperrelement und ein Anpressblockadeelement aufweist, wobei das Anpresssperrelement zwischen einer Normalstellung und einer Demontagestellung gegenüber der Steckaufnahme um die Steckachse drehbar ist. Das Anpressblockadeelement lässt eine Überführung der Steckaufnahme in die Anpressstellung zu, wenn sich das Anpresssperrelement in der Normalstellung befindet, wohingegen das Anpressblockadeelement eine Überführung der Steckaufnahme in die Anpressstellung blockiert, wenn sich das Anpresssperrelement in der Demontagestellung befindet.

Eine vorteilhafte Ausführungsform ist dadurch gekennzeichnet, dass das Anpresssperrelement eine Anpresssperrkontur aufweist, deren Bewegung entlang der Steckachse durch das Anpressblockadeelement blockiert wird, wenn sich das Anpresssperrelement in der Demontagestellung befindet.

Eine vorteilhafte Ausführungsform ist dadurch gekennzeichnet, dass das Anpresssperrelement eine Mitnahmekontur aufweist, wobei das zweite Modul einen Mitnehmer aufweist, welcher in die Mitnahmekontur eingreift, wenn das Steckteil in die Steckaufnahme eingesteckt wird.

Eine vorteilhafte Ausführungsform ist dadurch gekennzeichnet, dass eine Verdrehung des Steckteils von der Sperrstellung in die Passierstellung ein Mitdrehen des Anpresssperrelements von der Normalstellung in die Demontagestellung bewirkt. Eine weitere vorteilhafte Ausführungsform ist dadurch gekennzeichnet, dass eine Verdrehung des Steckteils von der Passierstellung in die Sperrstellung ein Mitdrehen des Anpresssperrelements von der Demontagestellung in die Normalstellung bewirkt.

Eine vorteilhafte Ausführungsform ist dadurch gekennzeichnet, dass das Anpresssperrelement eine um die Steckachse angeordnete Hülse umfasst.

Eine vorteilhafte Ausführungsform ist dadurch gekennzeichnet, dass das Werkzeuggerät ein Eintreibelement zur Übertragung von Energie auf ein einzutreibendes Befestigungselement und eine kraftbetriebene Antriebseinrichtung für einen Antrieb des Eintreibelements aufweist. Bevorzugt umfasst das erste Modul die Antriebseinrichtung, das Eintreibelement, einen Führungszylinder für das Eintreibelement und/oder ein Bedienelement. Ebenfalls bevorzugt umfasst das zweite Modul das Eintreibelement, einen Führungszylinder für das Eintreibelement, ein Bedienelement und/oder ein Magazin für das Befestigungselement.

Weitere Merkmale und Vorteile der Erfindung ergeben sich aus den Ausführungsbeispielen, welche nachfolgend anhand der anliegenden Zeichnungen näher erläutert werden. Es zeigen:
- Fig. 1: ein Werkzeuggerät in einer Seitenansicht,
- Fig. 2: einen Ausschnitt eines Moduls eines Werkzeuggeräts,
- Fig. 3: einen Ausschnitt eines Moduls eines Werkzeuggeräts in einer Querschnittsansicht,
- Fig. 4: einen Ausschnitt eines Steckteils in einer Querschnittsansicht,
- Fig. 5: einen Ausschnitt eines Steckteils und einer Steckaufnahme,
- Fig. 6: einen Ausschnitt eines Werkzeuggeräts in einer Explosionsdarstellung,
- Fig. 7: ein Verbindungsglied,
- Fig. 8: einen Ausschnitt eines Moduls eines Werkzeuggeräts in einer ersten Stellung,
- Fig. 9: einen Ausschnitt eines Moduls eines Werkzeuggeräts in einer zweiten Stellung,
- Fig. 10: einen Ausschnitt eines Moduls eines Werkzeuggeräts in einer dritten Stellung,
- Fig. 11: einen Riegel,
- Fig. 12: einen Ausschnitt eines Moduls eines Werkzeuggeräts,
- Fig. 13: ein Modul eines Werkzeuggeräts,
- Fig. 14: ein Modul eines Werkzeuggeräts,
- Fig. 15: einen Ausschnitt eines Moduls eines Werkzeuggeräts in einer ersten Stellung,
- Fig. 16: einen Ausschnitt eines Moduls eines Werkzeuggeräts in einer zweiten Stellung,
- Fig. 17: einen Ausschnitt eines Moduls eines Werkzeuggeräts,
- Fig. 18: einen Ausschnitt eines Moduls eines Werkzeuggeräts,
- Fig. 19: einen Ausschnitt eines Werkzeuggeräts in einer ersten Stellung, und
- Fig. 20: einen Ausschnitt eines Werkzeuggeräts in einer zweiten Stellung.

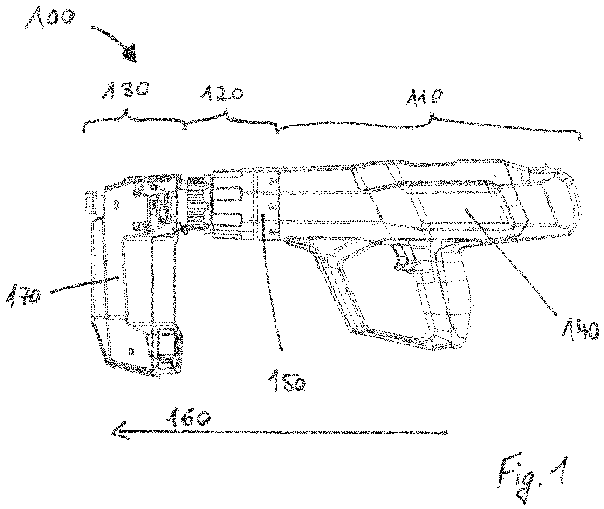

In Fig. 1 ist ein erstes Ausführungsbeispiel eines Werkzeuggeräts 100 in einer Seitenansicht dargestellt. Das Werkzeuggerät 100 umfasst ein Antriebsmodul 110, ein Energieeinstellmodul 120 und ein Magazinmodul 130, wobei das Magazinmodul 130 abnehmbar in das Energieeinstellmodul 120 eingesteckt ist, und wobei das Energieeinstellmodul 120 abnehmbar in das Antriebsmodul 110 eingesteckt ist. Bei nicht gezeigten Ausführungsbeispielen ist beispielsweise das Antriebsmodul in das Energieeinstellmodul oder das Energieeinstellmodul in das Magazinmodul eingesteckt.

Das Werkzeuggerät 100 ist als Setzgerät zum Setzen von nicht gezeigten Befestigungselementen wie Nägeln, Bolzen, Nieten und dergleichen ausgebildet und umfasst ein nicht gezeigtes, beispielsweise als Setzkolben ausgebildetes Eintreibelement zur Übertragung von Energie auf ein einzutreibendes Befestigungselement und eine nicht gezeigte, kraftbetriebene Antriebseinrichtung für einen Antrieb des Eintreibelements. Das erste Modul 110 umfasst ein Gehäuse 140, die in dem Gehäuse 140 aufgenommene Antriebseinrichtung und einen ebenfalls in dem Gehäuse 140 aufgenommenen Führungszylinder für das Eintreibelement. Das zweite Modul 120 umfasst ein Bedienelement 150 und das Magazinmodul 130 umfasst einen Eintreibkanal, in welchem ein Befestigungselement von dem Eintreibelement in einer Setzrichtung 160 in einen nicht gezeigten Untergrund, beispielsweise aus Stahl, Beton oder Holz, eingetrieben wird, sowie ein Magazin 170 für die Zuführung von Befestigungselementen in den Eintreibkanal.

Die Antriebseinrichtung umfasst beispielsweise eine pulver- oder gasbetriebene Brennkammer, eine druckluftbetriebene Druckkammer, eine mechanische oder pneumatische Antriebsfeder, oder ein elektrisch betriebenes Schwungrad. Mit dem Bedienelement 150 ist eine auf das Befestigungselement zu übertragende Eintreibenergie einstellbar.

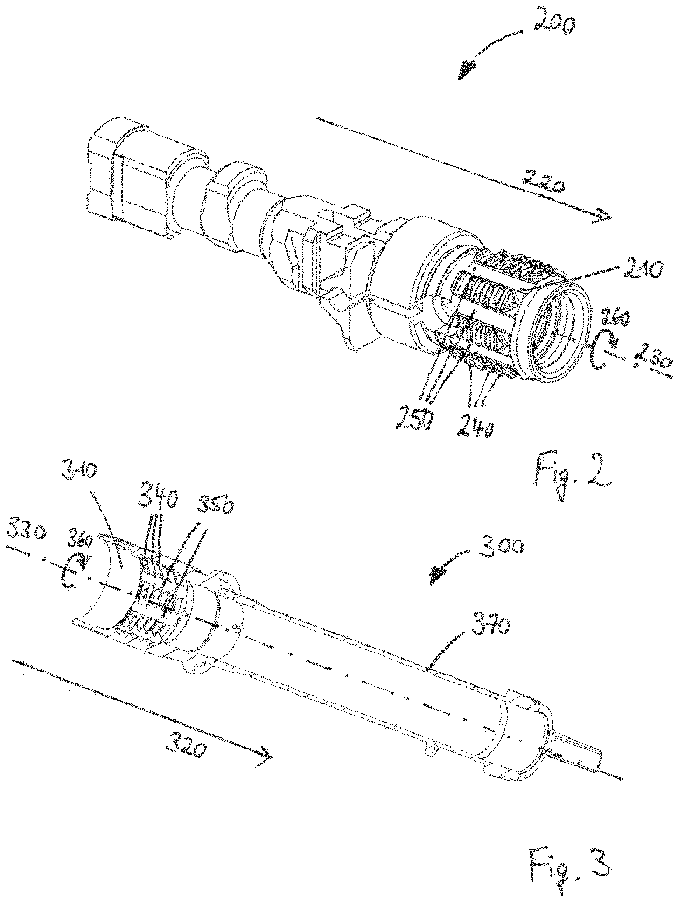

In Fig. 2 ist ein Magazinmodul 200 mit einem nicht gezeigten Magazin dargestellt. Das Magazinmodul 200 umfasst ein Steckteil 210, welches entlang einer eine Steckrichtung 220 definierenden Steckachse 230 in eine Steckaufnahme 310 (Fig. 3) einsteckbar ist. Das Steckteil 210 weist mehrere in der Steckrichtung 220 aufeinanderfolgende zweite Vorsprünge 240 auf, welche dafür vorgesehen sind, in einer Sperrstellung des Steckteils 210 gegenüber der Steckaufnahme 310 jeweils einen ersten Vorsprung 340 der Steckaufnahme 310 (Fig. 3) zu hintergreifen. In einer Umfangsrichtung um die Steckachse 230 zwischen den zweiten Vorsprüngen 240 weist das Steckteil 210 zweite Zwischenräume 250 auf, welche dafür vorgesehen sind, in einer Passierstellung des Steckteils 210 gegenüber der Steckaufnahme 310 die ersten Vorsprünge 340 der Steckaufnahme 310 entlang der Steckachse 230 passieren zu lassen. Dabei ist das Steckteil 210 in der Steckaufnahme 310 zwischen der Sperrstellung und der Passierstellung in einer Drehrichtung 260 um die Steckachse 230 verdrehbar. Die zweiten Vorsprünge 240 sind in der Steckrichtung 220 hintereinander und in der Drehrichtung 260 nebeneinander angeordnet. Die zweiten Zwischenräume 250 sind in dem vorliegenden Ausführungsbeispiel entlang der Drehrichtung 260 um jeweils 45° zueinander versetzt, so dass entlang einer Umfangsrichtung um die Steckachse 230 insgesamt acht verschiedene Passierstellungen vorgesehen sind.

In Fig. 3 ist ein Antriebsmodul 300 mit einem nicht gezeigten Antrieb für ein in einem Führungszylinder 370 geführtes, nicht gezeigtes Eintreibelement dargestellt. Das Antriebsmodul 300 umfasst eine Steckaufnahme 310, in welche ein Steckteil 210 (Fig. 2) entlang einer eine Steckrichtung 320 definierenden Steckachse 330 einsteckbar ist. Die Steckaufnahme 310 weist mehrere in der Steckrichtung 320 aufeinanderfolgende erste Vorsprünge 340 auf, welche dafür vorgesehen sind, in einer Sperrstellung des Steckteils 210 gegenüber der Steckaufnahme 310 jeweils einen zweiten Vorsprung 240 des Steckteils 210 (Fig. 2) zu hintergreifen. In einer Umfangsrichtung um die Steckachse 330 zwischen den ersten Vorsprüngen 340 weist die Steckaufnahme 310 erste Zwischenräume 350 auf, welche dafür vorgesehen sind, in einer Passierstellung des Steckteils 210 gegenüber der Steckaufnahme 310 die zweiten Vorsprünge 240 des Steckteils 210 entlang der Steckachse 330 passieren zu lassen. Dabei ist das Steckteil 210 in der Steckaufnahme 310 zwischen der Sperrstellung und der Passierstellung in einer Drehrichtung 360 um die Steckachse 330 verdrehbar. Die ersten Vorsprünge 340 sind in der Steckrichtung 320 hintereinander und in der Drehrichtung 360 nebeneinander angeordnet.

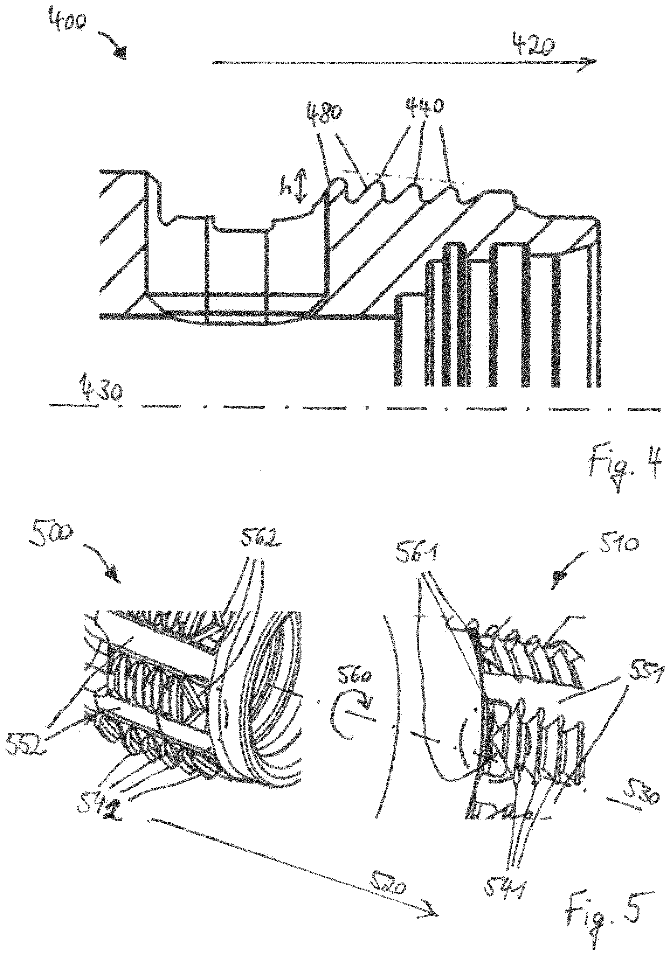

In Fig. 4 ist ein Ausschnitt eines Steckteils 400 in einer Querschnittsansicht dargestellt, welches entlang einer eine Steckrichtung 420 definierenden Steckachse 430 in eine nicht gezeigte Steckaufnahme einsteckbar ist. Das Steckteil 400 weist mehrere in der Steckrichtung 420 aufeinanderfolgende zweite Vorsprünge 440 auf, welche dafür vorgesehen sind, in einer Sperrstellung des Steckteils 400 gegenüber der Steckaufnahme jeweils einen ersten Vorsprung der Steckaufnahme zu hintergreifen.

Die zweiten Vorsprünge 440 weisen jeweils auf ihrer entgegen der Steckrichtung 420 weisenden Seite eine entlang der Steckachse 430 ansteigende zweite Flanke 480 auf. Die zweiten Flanken 480 werden entgegen der Steckrichtung 420 von jeweils einem zum nächsten zweiten Vorsprung 440 steiler. Dadurch werden Kräfte, welche zwischen dem Steckteil 400 und der Steckaufnahme wirken, gleichmässiger auf die einzelnen zweiten Vorsprünge 440 verteilt. Ausserdem werden die zweiten Vorsprünge 440 entgegen der Steckrichtung 420 hinsichtlich einer in Bezug auf die Steckachse radialen Höhe h von jeweils einem zum nächsten zweiten Vorsprung 440 höher. Dadurch kann das Steckteil 400 nur dann gegenüber der Steckaufnahme in einer Drehrichtung um die Steckachse 430 verdreht werden, wenn das Steckteil 400 in einer gewünschten Tiefe in die Steckaufnahme eingesteckt ist.

In Fig. 5 ist ein Ausschnitt eines Steckteils 500 und einer Steckaufnahme 510 dargestellt, wobei das Steckteil 500 entlang einer eine Steckrichtung 520 definierenden Steckachse 530 in die Steckaufnahme 510 einsteckbar ist. Die Steckaufnahme 510 weist mehrere in der Steckrichtung 520 aufeinanderfolgende erste Vorsprünge 541 auf. Das Steckteil 500 weist mehrere in der Steckrichtung 520 aufeinanderfolgende zweite Vorsprünge 542 auf, welche dafür vorgesehen sind, in einer Sperrstellung des Steckteils 500 gegenüber der Steckaufnahme 510 jeweils einen ersten Vorsprung 541 der Steckaufnahme 510 zu hintergreifen. In einer Umfangsrichtung um die Steckachse 530 zwischen den ersten 541 und zweiten Vorsprüngen 542 weisen die Steckaufnahme 510 beziehungsweise das Steckteil 500 erste 551 beziehungsweise zweite Zwischenräume 552 auf, welche dafür vorgesehen sind, in einer Passierstellung des Steckteils 500 gegenüber der Steckaufnahme 510 die zweiten 542 beziehungsweise ersten Vorsprünge 541 entlang der Steckachse 530 passieren zu lassen. Dabei ist das Steckteil 500 in der Steckaufnahme 510 zwischen der Sperrstellung und der Passierstellung in einer Drehrichtung 560 um die Steckachse 530 verdrehbar.

Die ersten Vorsprünge 541 und die zweiten Vorsprünge 542 sind in der Steckrichtung 520 jeweils hintereinander angeordnet. Die entlang der Setzachse 530 zu dem Steckteil 500 hin vordersten ersten Vorsprünge 541 weisen jeweils zwei zu der Drehrichtung 560 geneigte erste Einführrampen 561 auf. Dadurch wird das Finden der Passierstellung beim Einstecken des Steckteils 500 in die Steckaufnahme 510 erleichtert. Ebenso weisen die entlang der Setzachse 530 zu der Steckaufnahme hin vordersten zweiten Vorsprünge 542 jeweils zwei zu der Drehrichtung 560 geneigte zweite Einführrampen 562 auf.

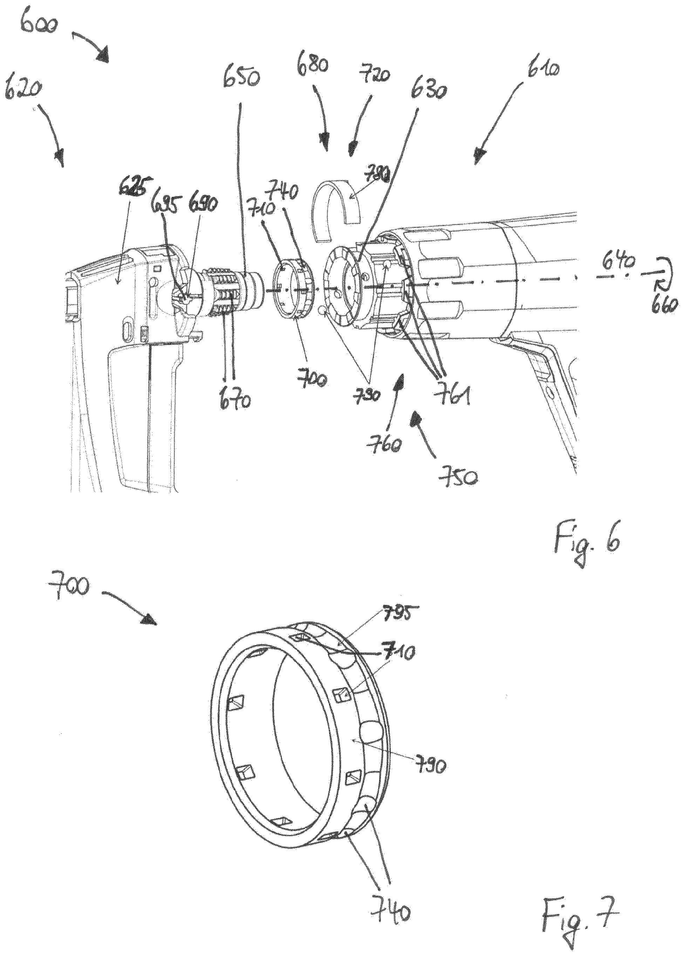

In Fig. 6 ist ein Ausschnitt eines Werkzeuggeräts 600 in einer Explosionsdarstellung dargestellt. Das Werkzeuggerät 600 umfasst ein Antriebsmodul 610 und ein von dem Antriebsmodul 610 abnehmbares Magazinmodul 620 mit einem Magazin 625. Das Antriebsmodul 610 weist eine Steckaufnahme 630 auf. Das Magazinmodul 620 weist ein entlang einer Steckachse 640 in die Steckaufnahme 630 einsteckbares Steckteil 650 auf. Dabei ist das Steckteil 650 in der Steckaufnahme 630 in einer Drehrichtung 660 zwischen mehreren sich abwechselnden Sperrstellungen und Passierstellungen um die Steckachse 640 verdrehbar. Die Steckaufnahme 630 weist nicht gezeigte erste Vorsprünge auf und das Steckteil 650 weist zweite Vorsprünge 670 auf, wobei in der Sperrstellung die zweiten Vorsprünge 670 die ersten Vorsprünge in Richtung der Steckachse 640 hintergreifen und in der Passierstellung die ersten Vorsprünge in Richtung der Steckachse 640 die zweiten Vorsprünge passieren lassen.

Das Werkzeuggerät 600 weist eine Verriegelungseinrichtung 680 mit einer Verriegelungsstellung und einer Entriegelungsstellung auf, wobei die Verriegelungseinrichtung 680 ein Abnehmen des Magazinmoduls 620 von dem Antriebsmodul 610 in der Verriegelungsstellung verhindert und in der Entriegelungsstellung erlaubt. Die Verriegelungseinrichtung 680 umfasst einen an dem Magazinmodul 620 angeordneten Riegel 690 und ein an dem Antriebsmodul 610 angeordnetes und eine Vielzahl von Riegelaufnahmen 710 (Fig. 7) aufweisendes Verbindungsglied 700. Weiterhin weist die Verriegelungseinrichtung 680 ein starr mit dem Riegel 690 verbundenes Betätigungselement 695 auf.

Weiterhin weist das Werkzeuggerät 600 eine Rasteinrichtung 720 mit zwei Rastelementen 730 und einer Vielzahl von Rastaufnahmen 740 auf, wobei die Rastelemente 730 jeweils in eine der Rastaufnahmen 740 einrasten, wenn sich das Steckteil 750 gegenüber der Steckaufnahme 730 in der Sperrstellung befindet. Die Rastelemente 730 sind an der Steckaufnahme 630 und damit an dem Antriebsmodul 610 angeordnet, wohingegen die Rastaufnahmen 740 an dem Verbindungsglied 700 angeordnet sind. Die Rastelemente 730 sind als Kugeln ausgebildet, welche in Kugelaufnahmen 770 in der Steckaufnahme 630 angeordnet und von einer aussenliegenden Ringfeder 780 nach innen auf das Verbindungsglied 700 zu belastet sind. Bei nicht gezeigten Ausführungsbeispielen sind ein oder mehrere Rastelemente, welche an dem Antriebsmodul oder dem Verbindungsglied angeordnet sind, sowie ein oder mehrere Rastaufnahmen, welche an dem Verbindungsglied beziehungsweise dem Antriebsmodul angeordnet sind, vorgesehen.

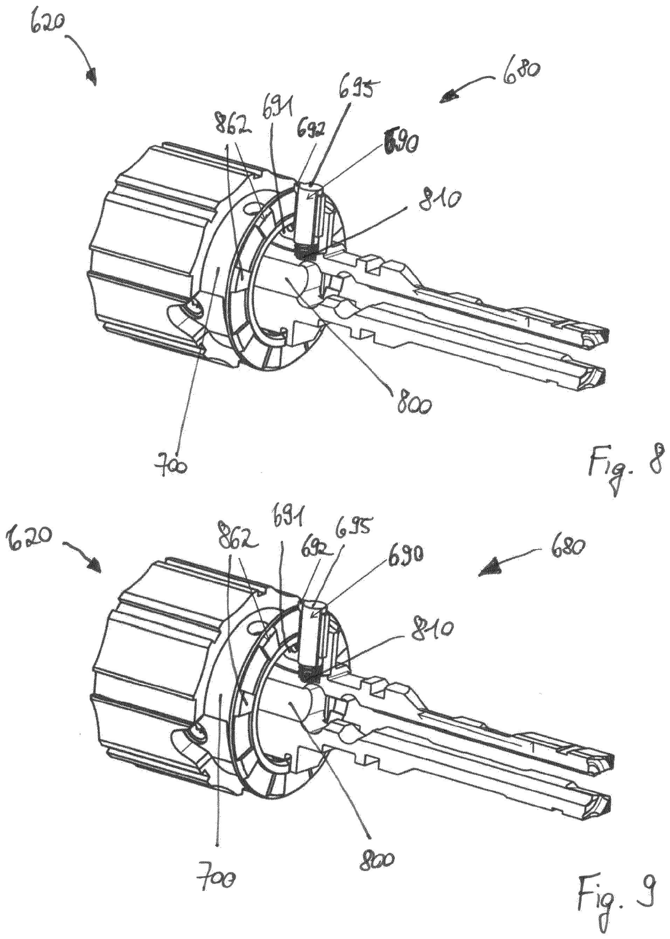

Weiterhin weist das Werkzeuggerät 600 eine Sicherungseinrichtung 750 mit einer gesicherten Stellung und einer entsicherten Stellung auf, wobei die Sicherungseinrichtung 750 ein Aktivieren des Werkzeuggeräts 600 in der gesicherten Stellung verhindert und in der entsicherten Stellung erlaubt. Eine Entsicherungssperre 760 der Sicherungseinrichtung 750 blockiert einen Übergang der Sicherungseinrichtung 750 von der gesicherten Stellung in die entsicherte Stellung in der Passierstellung und gibt ihn in der Sperrstellung frei. Die Entsicherungssperre 760 umfasst mehrere an dem Antriebsmodul 610 angeordnete erste Blockierelemente 761 und mehrere an dem Verbindungsglied 700 angeordnete zweite Blockierelemente 862 (Fig. 8) auf, wobei die ersten Blockierelemente 761 und die zweiten Blockierelemente 862 in der Passierstellung einander blockieren und in der Sperrstellung einander entlang der Steckachse 640 passieren lassen.

In Fig. 7 ist das Verbindungsglied 700 dargestellt, welches als Verbindungsring 790 ausgebildet ist und neben den Riegelaufnahmen 710 eine umlaufende Nut 795 aufweist, in welcher die Rastaufnahmen 740 angeordnet sind. Bei Drehung des Verbindungsglieds 700 gegenüber der Steckaufnahme 630 in der Drehrichtung 660 laufen die Rastelemente 730 in der Nut 795 und rasten in den Rastaufnahmen 740 ein, wenn sich das Steckteil 650 gegenüber der Steckaufnahme 630 in der Sperrstellung befindet. Das Verbindungsglied 700 wird dabei über die Verriegelungseinrichtung 680 mit dem Steckteil 650 mitgedreht.

In den Fig. 8, 9 und 10 ist das Magazinmodul 620 mit dem Riegel 690 zusammen mit dem Verbindungsglied 700 dargestellt, wobei verdeckende Teile des Magazinmoduls 620, wie beispielsweise das Steckteil, nicht gezeigt sind, so dass ein Eintreibkanal 800 in dem Magazinmodul 620 zu sehen ist. Der Riegel 690 greift mit einem Riegelfortsatz 691 bezüglich der Steckachse 640 radial nach aussen in eine der nicht sichtbaren Riegelaufnahmen des Verbindungsglieds 700 ein, so dass sich die Verriegelungseinrichtung 680 in der in einer Verriegelungsstellung befindet. Die Verriegelungseinrichtung 680 umfasst eine Riegelfeder 810, welche den Riegel 690 und die Riegelaufnahme aufeinander zu belastet, so dass die Verriegelungseinrichtung 680 in der Verriegelungsstellung gehalten ist.

In der Verriegelungsstellung gemäss Fig. 8 sperrt die Verriegelungseinrichtung 680 ein Verschieben des Steckteils gegenüber der Steckaufnahme entlang der Steckachse sowie ein Verdrehen des Steckteils in der Steckaufnahme um die Steckachse. Ein Verdrehen des Magazinmoduls 620 gegenüber dem Antriebsmodul 610 ist jedoch möglich, wobei sich das Verbindungsglied 700 in der Verriegelungsstellung der Verriegelungseinrichtung 680 mit dem Magazinmodul 620 von einer Rastposition der Rasteinrichtung 720 in die nächste mitdreht.

In Fig. 9 sind das Magazinmodul 620 und das Verbindungsglied 700 in einer weiteren solchen Rastposition der Rasteinrichtung 720 dargestellt. Die Verriegelungseinrichtung 680 befindet sich immer noch in der Verriegelungsstellung.

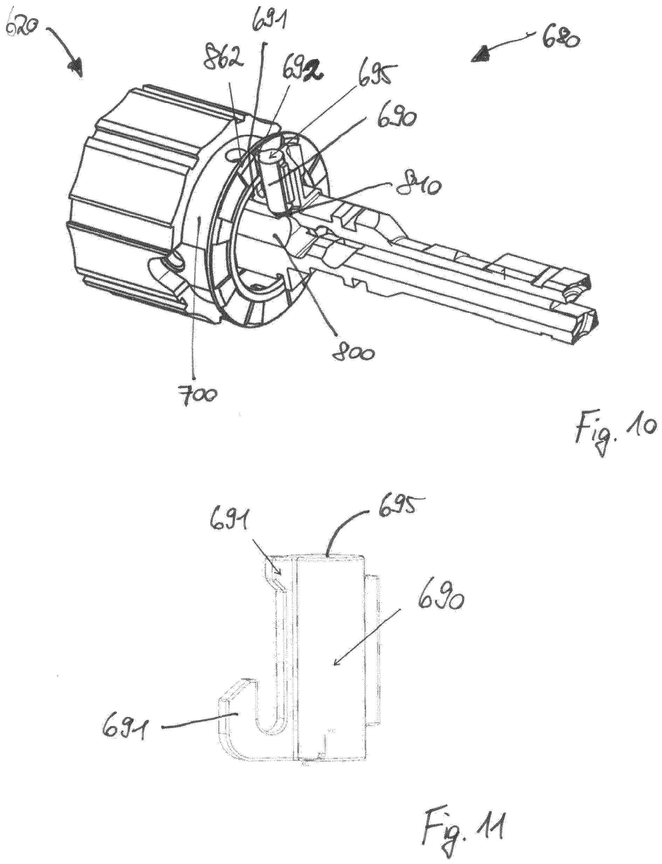

In Fig. 10 sind das Magazinmodul 620 und das Verbindungsglied 700 dargestellt, nachdem das Betätigungselement 695 und damit der Riegel 690 gegen die Kraft der Feder bezüglich der Steckachse 640 radial nach innen bewegt wurden. Der Riegelfortsatz 691 hat sich dabei aus der Riegelaufnahme herausbewegt, so dass sich die Verriegelungseinrichtung 680 nun in der Entriegelungsstellung befindet. In der Entriegelungsstellung gibt die Verriegelungseinrichtung 680 ein Verschieben des Steckteils gegenüber der Steckaufnahme entlang der Steckachse sowie ein Verdrehen des Steckteils in der Steckaufnahme um die Steckachse frei, so dass das Magazinmodul 620 durch Drehung in der Drehrichtung das Steckteil gegenüber der Steckaufnahme in die Passierstellung dreht, wonach das Magazinmodul 620 aus dem Antriebsmodul herausgezogen werden kann.

Beim Übergang von der Entriegelungsstellung in die Verriegelungsstellung bewegt sich der Riegel 690 bezüglich der Steckachse radial nach aussen in die Riegelaufnahme hinein. Bei nicht gezeigten Ausführungsbeispielen bewegt sich der Riegel beim Übergang von der Entriegelungsstellung in die Verriegelungsstellung bezüglich der Steckachse radial nach aussen oder entlang der Steckachse in die Riegelaufnahme hinein.

In Fig. 11 ist der Riegel 690 mit dem Riegelfortsatz 691 und einem Anschlag 692 dargestellt, welcher in der Entriegelungsstellung an einem der Blockierelemente 862 ansteht, wenn das Magazinmodul 620 in die Passierstellung gedreht wird. Das Betätigungselement 695 ist starr mit dem Riegel 690 verbunden und bildet mit diesem ein integrales Element.

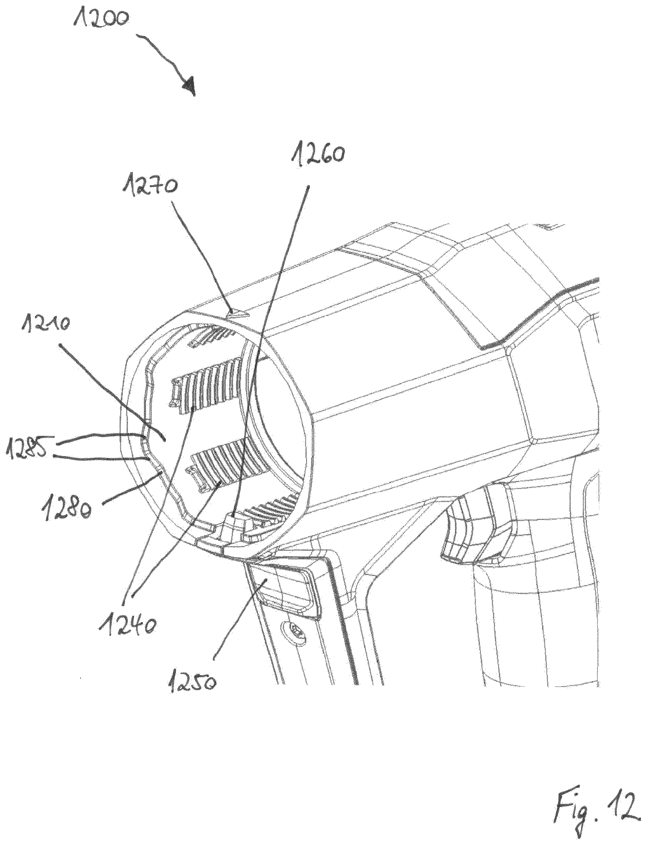

In Fig. 12 ist ein Antriebsmodul 1200 eines Werkzeuggeräts ausschnittsweise dargestellt. Das Antriebsmodul 1200 weist eine Steckaufnahme 1210 mit mehreren ersten Vorsprüngen 1240 auf. In die Steckaufnahme 1210 ist ein Steckteil eines weiteren Moduls des Werkzeuggeräts einsteckbar. Das Antriebsmodul 1200 umfasst ein Schloss 1260, welches in der in Fig. 12 gezeigten Normalstellung ein in die Steckaufnahme 1210 gestecktes Steckteil gegen ein Verdrehen gegenüber der Steckaufnahme 1210 sichert. Ein Druckknopf 1250 ist starr mit dem Schloss 1260 verbunden und muss gedrückt werden, um das Steckteil in der Steckaufnahme 1210 verdrehen und das weitere Modul von dem Antriebsmodul 1200 abnehmen zu können. Ausserdem weist das Antriebsmodul einen ersten Hinweispfeil 1270 auf.

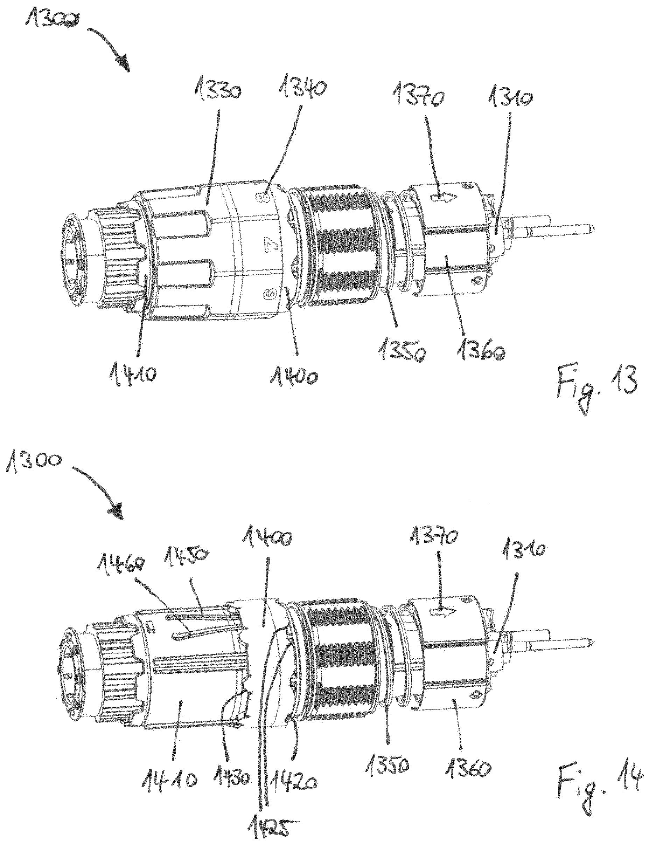

In Fig. 13 ist ein Bedienmodul 1300 eines Werkzeuggeräts dargestellt. Das Bedienmodul 1300 weist ein Steckteil 1310 auf, welches nicht gezeigte zweite Vorsprünge aufweist, welche für ein Hintergreifen der ersten Vorsprünge 1240 des Antriebsmoduls 1200 (Fig. 12) vorgesehen sind, wenn das Steckteil 1310 in die Steckaufnahme 1210 gesteckt und gegenüber der Steckaufnahme 1210 verdreht wird. Das Bedienmodul 1300 umfasst eine Einstellhülse 1330, mit welcher eine Eintreibenergie des Werkzeuggeräts einstellbar ist. Zu diesem Zweck trägt die Einstellhülse eine Energieskala 1340. Weiterhin umfasst das Bedienmodul eine Anpressfeder 1350 und ein Federlager 1360 zur Abstützung der Anpressfeder 1350. Das Federlager 1360 trägt einen zweiten Hinweispfeil 1370, welcher mit dem ersten Hinweispfeil 1270 des Antriebsmoduls 1200 (Fig. 12) in Deckung kommen muss, damit das Bedienmodul 1300 in der gewünschten Position an das Antriebsmodul 1200 angebracht werden kann.

In Fig. 14 ist das Bedienmodul 1300 ohne die Einstellhülse dargestellt. Unter der Einstellhülse weist das Bedienmodul 1300 ein Sperrglied 1400 und ein Stützglied 1410 auf, wobei das Sperrglied 1400 eine zu dem Antriebsmodul 1200 hinweisende äussere Sperrkontur 1420 und eine von dem Antriebsmodul 1200 wegweisende innere Sperrkontur 1430 aufweist. Das Antriebsmodul 1200 weist eine zu dem Sperrglied 1400 hinweisende Gegenkontur 1280 auf, wobei die äussere Sperrkontur 1420 in einer Sperrstellung des Sperrglieds 1400 in die Gegenkontur 1280 eingreift, um eine Verdrehung des Bedienmoduls 1300 gegenüber dem Antriebsmodul 1200 zu sperren. Das Stützglied 1410 weist eine Stützkontur 1440 auf.

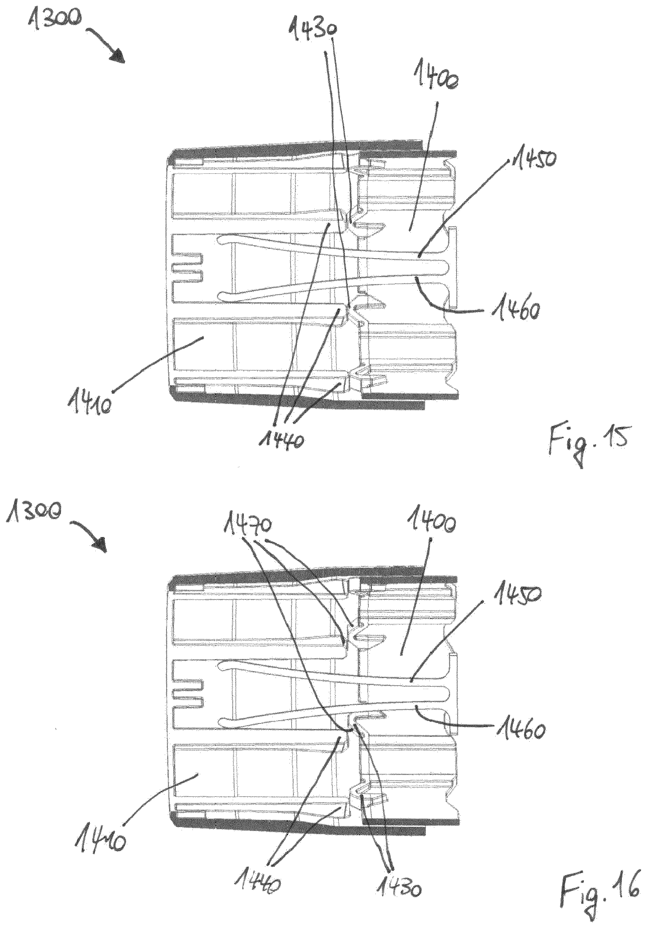

In Fig. 15 ist das Bedienmodul 1300 ausschnittsweise dargestellt, wobei sich das Stützglied 1410 in einer Haltestellung befindet. In der Haltestellung stützt die Stützkontur 1440 die innere Sperrkontur 1430 in Richtung der Steckachse ab, um das Sperrglied 1400 in der Sperrstellung zu halten.

In Fig. 16 ist das Bedienmodul 1300 ausschnittsweise dargestellt, wobei sich das Stützglied 1410 in einer Freigabestellung befindet. In der Freigabestellung lässt die Stützkontur 1440 ein Ausrücken des Sperrglieds 1400 aus der Sperrstellung entlang der Steckachse zu.

Das Stützglied 1410 ist von der Haltestellung in die Freigabestellung durch Verdrehung des Stützglieds 1410 gegenüber dem Sperrglied 1400 um die Steckachse überführbar. Die innere Sperrkontur 1430 und die Stützkontur 1440 weisen Einführschrägen 1470 zur Erleichterung einer Überführung des Stützglieds 1410 von der Freigabestellung in die Haltestellung auf. Darüber hinaus weisen die äussere Sperrkontur 1420 (Fig. 14) und die Gegenkontur 1280 (Fig. 12) Ausrückrampen 1425, 1285 zur Erleichterung eines Ausrückens des Sperrglieds 1400 aus der Sperrstellung gegenüber dem Antriebsmodul 1200 auf. Weiterhin weist das Bedienmodul 1300 eine erste Stützfeder 1450 und eine zweite Stützfeder 1460 auf, welche das Stützglied 1410 gegenüber dem Sperrglied 1400 in die Haltestellung vorbelasten.

Wird nun die Einstellhülse 1330 um die Steckachse gedreht, wird je nach Drehsinn die erste Stützfeder 1450 oder die zweite Stützfeder 1460 eingefedert, so dass das Stützglied 1410 gegen die Federkraft der ersten oder zweiten Stützfeder 1450, 1460 in die Freigabestellung überführt wird. Jetzt kann das Sperrglied 1400 aus der Sperrstellung ausrücken und seinerseits gegenüber dem Antriebsmodul 1200 mitgedreht werden. Es ist also eine Energieverstellung mit einer Hand möglich, während die andere Hand das Antriebsmodul 1200 hält.

Das Sperrglied 1400 kann dabei in mehrere Raststellungen der Gegenkontur 1280 einrücken, so dass mehrere Energiestufen einstellbar sind. Sobald das Sperrglied 1400 in eine der Raststellungen eingerückt ist oder die Bedienhülse 1330 losgelassen wird, drückt die Stützfeder 1450, 1460 das Stützglied 1410 zurück in die Haltestellung gemäss Fig. 15, so dass das Sperrglied 1400 seinerseits in der eingerückten Sperrstellung gehalten ist. Neben den verschiedenen Energiestufen weist das Sperrglied 1400 auch eine Demontagestellung auf, in welcher das Bedienmodul 1300 von dem Antriebsmodul 1200 abnehmbar ist.

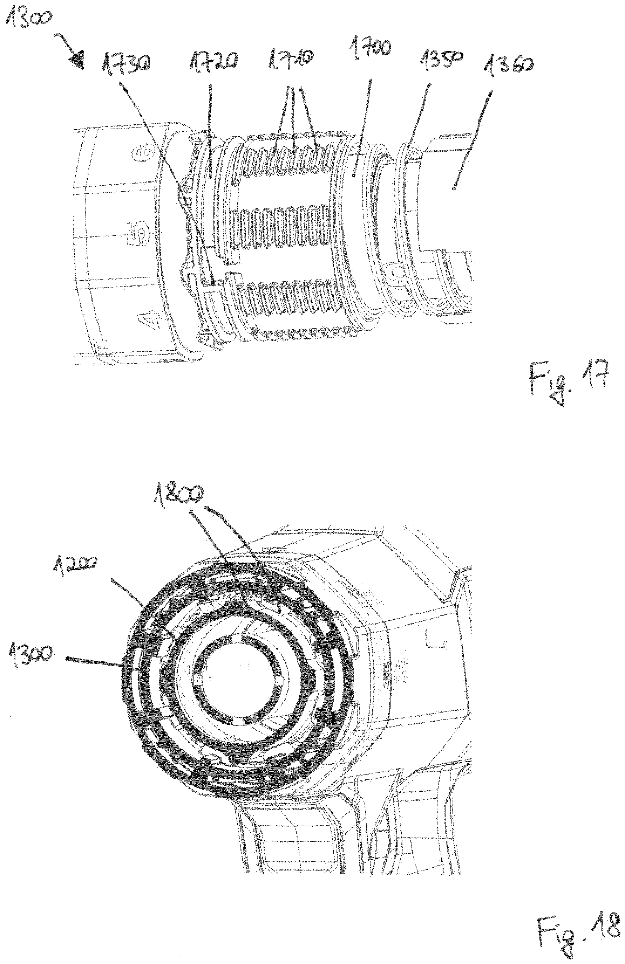

In Fig. 17 ist das Bedienmodul 1300 ausschnittsweise dargestellt. Das Bedienmodul 1300 umfasst ein Steckteil 1700 mit mehreren zweiten Vorsprüngen 1710. Das Steckteil 1700 weist eine Kulisse 1720 auf, in welcher das Schloss 1260 bei Drehung des Steckteils 1700 gegenüber dem Antriebsmodul 1200 bis zu einem Endanschlag 1730 läuft, welcher der Demontagestellung des Sperrglieds 1400 entspricht und in welcher das Bedienmodul 1300 von dem Antriebsmodul 1200 abnehmbar ist.

In Fig. 18 ist das Antriebsmodul 1200 ausschnittsweise in einer Querschnittsansicht dargestellt. Eine Anpresskulisse 1800 zwischen dem Bedienmodul 1300 und dem Antriebsmodul 1200 verhindert ein Anpressen und Auslösen des Werkzeuggeräts in der Demontagestellung und lässt das Anpressen und Auslösen des Werkzeuggeräts in jeder der Betriebsstellungen (Energiestufen) zu.

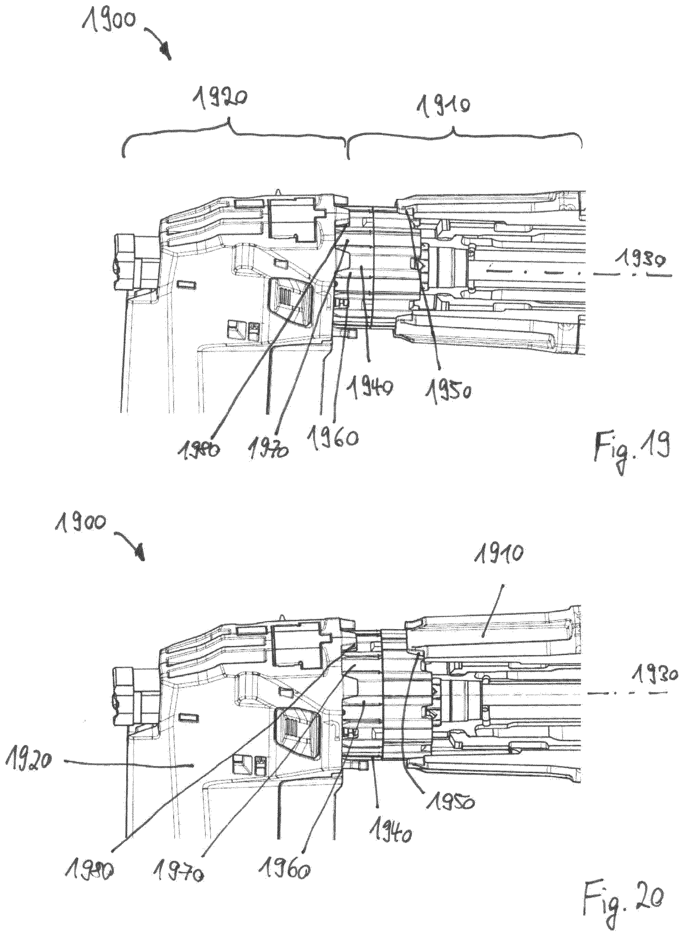

In den Fig. 19 und 20 ist ein Werkzeuggerät 1900 mit einem Antriebsmodul 1910 und einem von dem Antriebsmodul 1900 abnehmbaren Magazinmodul 1920 dargestellt. Das Magazinmodul 1920 umfasst ein nicht gezeigtes Steckteil. Das Antriebsmodul 1910 umfasst eine nicht gezeigte Steckaufnahme, welche in einer Grundstellung gemäss Fig. 20 ein Auslösen des Werkzeuggeräts verhindert und in einer Anpressstellung gemäss Fig. 19 ein Auslösen des Werkzeuggeräts zulässt. Ein Anpressen des Magazinmoduls 1920 an das Antriebsmodul 1900 überführt die Steckaufnahme in Richtung einer Steckachse 1930 in die Anpressstellung.

Das Antriebsmodul 1910 umfasst ein entlang der Steckachse 1930 mit der Steckaufnahme mitbewegtes Anpresssperrelement 1940 und ein Anpressblockadeelement 1950, wobei das Anpresssperrelement 1940 zwischen einer Normalstellung und einer Demontagestellung gegenüber der Steckaufnahme um die Steckachse 1930 drehbar ist. Das Anpresssperrelement 1940 weist eine Anpresssperrkontur 1960 auf, deren Bewegung entlang der Steckachse 1930 durch das Anpressblockadeelement 1950 blockiert wird, wenn sich das Anpresssperrelement 1940 in der Demontagestellung befindet. Das Anpressblockadeelement 1950 lässt somit eine Überführung der Steckaufnahme in die Anpressstellung nur dann zu, wenn sich das Anpresssperrelement 1940 in der Normalstellung befindet. In der Demontagestellung des Anpresssperrelements 1940 blockiert das Anpressblockadeelement 1950 dagegen eine Überführung der Steckaufnahme in die Anpressstellung.

Damit sich das Anpresssperrelement 1940 mit dem Magazinmodul 1920 mitdreht, weist das Anpresssperrelement 1940 eine Mitnahmekontur 1970 und das Magazinmodul 1920 weist einen Mitnehmer 1980 auf, welcher in die Mitnahmekontur 1970 eingreift, wenn das Steckteil in die Steckaufnahme eingesteckt wird.

Eine Verdrehung des Steckteils von der Sperrstellung in die Passierstellung bewirkt ein Mitdrehen des Anpresssperrelements 1940 von der Normalstellung in die Demontagestellung. Ebenso bewirkt eine Verdrehung des Steckteils von der Passierstellung in die Sperrstellung ein Mitdrehen des Anpresssperrelements 1940 von der Demontagestellung in die Normalstellung. Das Anpresssperrelement 1940 ist als eine um die Steckachse 1930 angeordnete Hülse ausgebildet.

Die Erfindung wurde anhand mehrerer Ausführungsbeispiele eines Eintreibgeräts für Befestigungselemente beschrieben. Es versteht sich, dass sämtliche Merkmale der einzelnen Ausführungsbeispiele auch in einer einzigen Vorrichtung in beliebiger Kombination verwirklichen lassen, sofern sie sich nicht gegenseitig widersprechen. Es wird auch darauf hingewiesen, dass die Erfindung auch für andere Anwengungen geeignet ist, insbesondere für Schraubgeräte oder Bohrhämmer und dergleichen.

## Patentansprüche

1. Werkzeuggerät, umfassend ein erstes Modul und ein von dem ersten Modul abnehmbares zweites Modul, wobei das erste Modul eine Steckaufnahme aufweist und das zweite Modul ein entlang einer eine Steckrichtung definierenden Steckachse in die Steckaufnahme einsteckbares Steckteil aufweist, wobei das Steckteil in der Steckaufnahme zwischen einer Sperrstellung und einer Passierstellung in einer Drehrichtung um die Steckachse verdrehbar ist, wobei die Steckaufnahme einen ersten Vorsprung aufweist und das Steckteil einen zweiten Vorsprung aufweist, wobei in der Sperrstellung der zweite Vorsprung den ersten Vorsprung in Richtung der Steckachse hintergreift, wobei in der Passierstellung der erste Vorsprung in Richtung der Steckachse den zweiten Vorsprung passieren lässt, wobei das Werkzeuggerät eine Verriegelungseinrichtung mit einer Verriegelungsstellung und einer Entriegelungsstellung aufweist, und wobei die Verriegelungseinrichtung ein Abnehmen des zweiten Moduls von dem ersten Modul in der Verriegelungsstellung verhindert und in der Entriegelungsstellung erlaubt.

2. Werkzeuggerät nach Anspruch 1, wobei die Verriegelungseinrichtung einen an einem der beiden Module angeordneten Riegel und eine an dem anderen der beiden Module angeordnete Riegelaufnahme aufweist, und wobei der Riegel in der Verriegelungsstellung in die Riegelaufnahme eingreift und in der Entriegelungsstellung ausserhalb der Riegelaufnahme angeordnet ist.

3. Werkzeuggerät nach einem der vorhergehenden Ansprüche, wobei das andere der beiden Module ein Verbindungsglied aufweist, welches gegenüber dem übrigen Modul um die Steckachse drehbar angeordnet ist und die Riegelaufnahme aufweist.

4. Werkzeuggerät nach einem der vorhergehenden Ansprüche, wobei sich der Riegel beim Übergang von der Entriegelungsstellung in die Verriegelungsstellung bezüglich der Steckachse radial nach innen in die Riegelaufnahme hinein bewegt.

5. Werkzeuggerät nach einem der vorhergehenden Ansprüche, wobei sich der Riegel beim Übergang von der Entriegelungsstellung in die Verriegelungsstellung bezüglich der Steckachse radial nach aussen in die Riegelaufnahme hinein bewegt.

6. Werkzeuggerät nach einem der vorhergehenden Ansprüche, wobei die Verriegelungseinrichtung ein Betätigungselement aufweist, welches insbesondere starr mit dem Riegel verbunden ist.

7. Werkzeuggerät nach einem der vorhergehenden Ansprüche, wobei die Verriegelungseinrichtung eine Riegelfeder aufweist, welche den Riegel und die Riegelaufnahme aufeinander zu belastet.

8. Werkzeuggerät nach einem der vorhergehenden Ansprüche, wobei die Verriegelungseinrichtung ein Verschieben des Steckteils gegenüber der Steckaufnahme entlang der Steckachse in der Verriegelungsstellung sperrt und in der Entriegelungsstellung freigibt.

9. Werkzeuggerät nach einem der vorhergehenden Ansprüche, wobei die Verriegelungseinrichtung mehrere an dem anderen der beiden Module angeordnete Riegelaufnahmen aufweist.

10. Werkzeuggerät nach einem der vorhergehenden Ansprüche, wobei das Steckteil in der Steckaufnahme zwischen mehreren Sperrstellungen und mehreren Passierstellungen um die Steckachse verdrehbar ist.

11. Werkzeuggerät nach einem der vorhergehenden Ansprüche, weiterhin umfassend eine Rasteinrichtung mit einem Rastelement und einer Rastaufnahme, wobei das Rastelement in der Sperrstellung in die Rastaufnahme einrastet.

12. Werkzeuggerät nach einem der vorhergehenden Ansprüche, weiterhin umfassend eine Sicherungseinrichtung mit einer gesicherten Stellung und einer entsicherten Stellung, wobei die Sicherungseinrichtung ein Aktivieren des Werkzeuggeräts in der gesicherten Stellung verhindert und in der entsicherten Stellung erlaubt, weiterhin umfassend eine Entsicherungssperre, welche einen Übergang der Sicherungseinrichtung von der gesicherten Stellung in die entsicherte Stellung in der Passierstellung blockiert und in der Sperrstellung freigibt.

13. Werkzeuggerät nach einem der vorhergehenden Ansprüche, wobei die Entsicherungssperre ein an dem ersten Modul angeordnetes erstes Blockierelement und ein an dem zweiten Modul angeordnetes zweites Blockierelement aufweist, und wobei das erste Blockierelement und das zweite Blockierelement in der Passierstellung einander blockieren und in der Sperrstellung einander passieren lassen.

14. Werkzeuggerät nach einem der vorhergehenden Ansprüche, wobei die Verriegelungseinrichtung ein Verdrehen des Steckteils in der Steckaufnahme um die Steckachse in der Verriegelungsstellung sperrt und in der Entriegelungsstellung freigibt.

15. Werkzeuggerät nach einem der vorhergehenden Ansprüche, wobei sich der Riegel beim Übergang von der Entriegelungsstellung in die Verriegelungsstellung entlang der Steckachse in die Riegelaufnahme hinein bewegt.
